**Europäisches Patentamt**

**European Patent Office**

**Office européen des brevets**

(19)

(11) Veröffentlichungsnummer: **0 204 013**
**B1**

(12) **EUROPÄISCHE PATENTSCHRIFT**

(45) Veröffentlichungstag der Patentschrift:
**10.08.88**

(51) Int. Cl.⁴: **C 04 B 35/52**

(21) Anmeldenummer: **85106771.0**

(22) Anmeldetag: **01.06.85**

(54) Verfahren zum Herstellen von Glaskohlenstoffkörpern mit schaumartiger Struktur.

(43) Veröffentlichungstag der Anmeldung:
**10.12.86 Patentblatt 86/50**

(45) Bekanntmachung des Hinweises auf die Patenterteilung:
**10.08.88 Patentblatt 88/32**

(84) Benannte Vertragsstaaten:
**DE FR GB IT SE**

(56) Entgegenhaltungen:
**DE-A-1 216 174**
**FR-A-2 290 398**
**FR-A-2 380 985**
**US-A-3 302 999**
**US-A-4 022 875**

(73) Patentinhaber: **SIGRI GmbH, Werner- von- Siemens-Strasse 18, D-8901 Meitingen (DE)**

(72) Erfinder: **Tetzlaff, Ernst, Prof. Dr.Ing., Virchowstrasse 2, D-7920 Heidenheim (DE)**

LIBER, STOCKHOLM 1988

**Beschreibung**

Die Erfindung betrifft ein Verfahren zum Herstellen von Glaskohlenstoffkörpern mit schaumartiger Struktur aus thermoplastischen Kunststoffen, die vor dem Carbonisieren in eine thermisch stabile Form übergeführt worden sind.

Zur Herstellung von Glaskohlenstoffkörpern ist es bekannt, aus duroplastischen Kunststoffen gebildete Formlinge durch Erwärmen zunächst auszuhärten und durch Erhitzen auf etwa 800°C und mehr in Kohlenstoff überzuführen. Es ist auch bereits vorgeschlagen worden, aus aromatische Gruppen enthaltende thermoplastischen Kunststoffen Glaskohlenstoffkörper herzustellen. Voraussetzung dieses Verfahrens ist die Überführung des Themoplasten in eine thermische stabile, bei der Carbonisierungsbehandlung nichtschmelzende oder erweichende Form. Nach diesem Verfahren hergestellte Glaskohlenstoffkörper haben eine dichte Struktur und sie sind für Gase und Flüssigkeiten undurchlässig. Für bestimmte Anwendungen sind poröse, für Fluide durchlässige Glaskohlenstoffkörper von Vorteil, z. B. für Wärmedämmungen, Filter, Elektroden und Katalysatorträger. Zur Herstellung poröser Glaskohlenstoffkörper sind mehrere Verfahren bekannt geworden. Bei einem Verfahren wird ein poröser Kunststoffkörper z. B. aus Polyurethan oder einem Polyolefin mit der Lösung eines härtbaren Harzes, wie Furan- oder Phenolharz imprägniert und der imprägnierte Körper in inerter Atmosphäre auf etwa 1200°C erhitzt (DE-PS-1 216 174). Man erhält einen harten Glaskohlenstoffkörper mit einer Rohdichte von etwa 0,1 bis 0,4 g/cm$^3$. Bei einem anderen Verfahren werden Körper aus geschäumtem Polyurethan in einer sauerstoffhaltigen Atmosphäre auf etwa 200°C erhitzt und die dabei in eine thermisch stabile Form übergeführten Körper anschließend durch Erhitzen in einer sauerstofffreien Atmosphäre carbonisiert. Die Rohdichte der schaumartigen Glaskohlenstoffkörper beträgt etwa 0,1 bis 0,2 g/cm$^3$ (US-PS-3 302 999).

Die Struktur der nach den vorbekannten Verfahren hergestellten porösen Glaskohlenstoffkörper ist über das gesamte Körpervolumen annähernd gleich. Bedingt durch große Porosität in den Oberflächenzonen ist daher die Abriebbeständigkeit vergleichsweise gering und das zugängliche Porenvolumen ist für die Beständigkeit im Kontakt mit fluiden oxidierenden Medien von Nachteil. Der Erfindung liegt daher die Aufgabe zugrunde, Glaskohlenstoffkörper mit schaumartiger Struktur herzustellen, deren Porosiät in oberflächennahen Zonen wesentlich kleiner ist als die Porosität des zentralen Kerns.

Die Aufgabe wird gelöst mit einem hygroskopischen Thermoplasten, der zu einem Körper geformt und zur Aufnahme von Wasser in einer feuchten Atmosphäre gelagert wird. Zur Erzeugung einer feuchtigkeitsarmen Randzone wird der Körper bei einer tieferen ersten Temperatur getrocknet, dann auf eine zweite Temperatur oberhalb der Erveichungstemperatur des Thermoplasten erhitzt und durch Aufblähen des noch wasserhaltigen Kerns ein schaumartig strukturierter poröser Bereich erzeugt. Der Körper wird dann in an sich bekannter Weise thermisch stabilisiert und durch Erhitzen carbonisiert.

Geeignet zur Herstellung von Glaskohlenstoffkörpern sind grundsätzlich alle thermoplastischen Kunststoffe, die bei Lagerung in Wasser, siedendem Wasser oder in einer wasserdampfhaltigen Atmosphäre Feuchtigkeit aufnehmen. Der Sättigungswert in kaltem oder in siedendem Wasser sollte zweckmäßig wenigstens 0,3 % betragen. Beispiele derartiger Thermoplasten sind Polyamide, Polyimid, Polyurethan, bevorzugt werden wegen der einfachen thermischen Stabilisierung und der vergleichsweise großen Kohlenstoffausbeute beim Carbonisieren aromatische Gruppen enthaltende thermoplastische Kunststoffe, wie Polyphenylenoxid, Polyetheretherketon, Polyethersulfon und besonders Polysulfon. Thermoplastische Kunststoffe lassen sich anders als Duroplasten, die in der Regel als Ausgangsmaterial für die Herstellung von Glaskohlenstoff verwendet werden, leicht mit Hilfe eingeführter Verfahren zu Körpern fast beliebiger Größe und Gestalt formen. Beispiele verbreiteter Verfahren sind Extrudieren, Kalandrieren, Gesenkpressen, Spritzgießen. Diese Formungsverfahren werden allen technischen Ansprüchen gerecht, so daß ohne großen technischen Aufwand ein breites Spektrum von Ausgangskörpern für Glaskohlenstoff mit schaumartiger Struktur hergestellt werden kann.

Der Erfindung liegt die überraschende Erkenntnis zugrunde, daß die von einem Thermoplasten in einer feuchtigkeitshaltigen Atmosphäre aufgenommene Feuchtigkeit vollständig aus einer schmalen von der Oberfläche ausgehenden Zone entfernt werden kann und diese Zone bei der Überführung des Thermoplasten in Glaskohlenstoff eine dichte Schicht bildet, wohingegen der feuchtigkeitshaltige Kern in einen porösen, schaumartigen Glaskohlenstoff umgewandelt wird. In einem ersten Schritt nimmt nach der Erfindung der Thermoplast über sein gesamtes Volumen Feuchtigkeit auf und zu diesem Zweck taucht man einen Formling oder Granulat in Wasser ein oder lagert diesen in einer feuchtigkeitshaltigen Atmosphäre. Die Verarbeitung von Granulat ist vorzuziehen, wenn die Körper durch Spritzgießen geformt werden sollen.

Für die Entwicklung einer gleichförmigen Porenstruktur ist eine gleichmäßige Verteilung der Feuchtigkeit wichtig. Wasser sollte daher bis zur Sättigung aufgenommen werden, wobei die absolute Menge im wesentlichen durch die Temperatur der Körper und ihrer Umgebung eingestellt wird. Die Wasseraufnahme kann durch einfaches Wägen bestimmt und kontrolliert werden, wobei die erreichte Porosität des Kerns etwa der aufgenommenen Wassermenge proportional ist.

Die wasserhaltigen Körper werden dann auf eine erste Temperatur erhitzt und die Feuchtigkeit wird dem Körper aus einer Randzone entzogen. Die Dicke der Zone ist eine Funktion der Trocknungstemperatur und der Trocknungszeit und für jeden thermoplastischen Kunststoff muß die Wirkung der Parameter auf die Dicke der wasserfreien oder nur einen sehr geringen Wassergehalt aufweisenden Zone durch Versuche bestimmt werden. Derartige Versuche sind dem Fachmann geläufig. Naturgemäß sollte die Trocknungstemperatur kleiner als die Erweichungstemperatur des Thermoplasten sein, über die die Körper in einer zweiten Stufe erhitzt werden. Die im Kern enthaltene Feuchtigkeit verdampft dabei und treibt den Kern auf, wobei die getrocknete Randschicht leicht verformt wird. Außer dem Gehalt an aufgenommenem Wasser ist die dabei erzielte Porosität des Kerns von der Erhitzungsgeschwindigkeit abhängig; ein großer Feuchtigkeitsgehalt und eine schnelle Erhitzung ergeben eine große Porosität. Gegebenenfalls wird man die Porenbildung zusätzlich auch durch die Zugabe von an sich bekannter physikalische und chemische Treibmittel modifzieren, wobei die Struktur der dichten Randzone nicht beeinträchtigt werden sollte. Porenregler oder Keimbildner, wie Natriumhydrogencarbonat und organische Säuren können gegebenenfalls zur Steuerung der Porengrößenverteilung als Zusätze verwendet werden. Ein anderes Mittel zur Regelung der Porenbildung ist die Versteifung des Thermoplasten durch eine begrenzte Vernetzung, vorzugsweise durch Bestrahlen mit einer ionisierenden Strahlung. Die Verfahrensstufen - Sättigen mit Wasser, Trocknen einer Randschicht und Auftreiben des Kerns - werden gegebenenfalls mehrmals wiederholt, bis die für den jeweiligen Verwendungszweck passende Porosität und Porenstruktur eingestellt ist. Da die Körper sich beim Auftreiben oder Aufschäumen des Kerns mehr oder weniger stark verformen, erhitzt man die Körper zweckmäßig in beheizten Werkzeugen, die die Gestalt der aufgeschäumten Körper bestimmen. Für die Herstellung von Körpern aus feuchtigkeitshaltigem Granulat ist Spritzgießen von Vorteil.

Durch Kühlen des Werkzeugs wird dabei die Erwärmung der Randzone über die Erweichungstemperatur des Thermoplasten verhindert. Die einen Kern mit schaumartiger Struktur und eine dichte Oberflächenschicht aufweisenden Körper werden vor der Überführung in Glaskohlenstoff thermisch stabilisiert. Thermisch stabilisierte Thermoplasten sind unschmelzbar und verformen sich bei der Carbonisierungsbehandlung nicht, ausgenommen die normale Schwindung als Folge der Pyrolyse. Die Körper werden zu diesem Zweck im Kontakt mit Luft, anderen Oxidationsmitteln oder Lewis-Säuren auf etwa 200 bis 300°C erhitzt, bevorzugt wird aber die Bestrahlung der Körper mit einer ionisierenden Strahlung, besonders mit Beta-Strahlung. Die Bestrahlungsdosis hängt von der Art des verwendeten thermoplastischen Kunststoffs ab, besonders günstige Ergebnisse erzielt man mit einer Dosis von 0,2 bis 1,5 MJ/kg. Bei der Bestrahlung der Körper mit ionisierender Strahlung verläuft die Vernetzung des Thermoplasten gleichmäßiger und schneller als diffusionsgesteuerte Vernetzungsreaktionen im Kontakt mit Oxidationsmitteln und Lewis-Säuren. In technisch vernünftigen Zeitabschnitten erreicht man bei diesem Verfahren im allgemeinen nur die Vernetzung und thermische Stabilisierung sehr dünner Schichten. Bei der Vernetzung durch ionisierende Strahlung ist andererseits dafür Sorge zu tragen, daß der Thermoplast nicht überhitzt wird. Es ist daher von Vorteil, die Bestrahlungsdosis in mehreren Stufen aufzubringen und zwischen den Stufen die Körper jeweils abzukühlen. Gegebenenfalls ist es auch von Vorteil, als Granulat vorliegende Thermoplaste durch Bestrahlung wenigstens teilweise zu stabilisieren, in der thermisch stabilisierten Form mit Feuchte zu sättigen und die porösen Körper nochmals zu bestrahlen oder auch thermisch nachzuvernetzen. Die thermisch stabilisierten Körper werden dann in an sich bekannter Weise durch Erhitzen im Vakuum oder in einer inerten oder reduzierenden Atmosphäre carbonisiert. Die Körper werden dazu auf wenigstens 800°C erhitzt, die Aufheizgeschwindigkeit sollte unterhalb etwa 600°C und etwa 1 bis 5 K/h und oberhalb dieser Grenztemperatur etwa 30 K/h betragen. Im einzelnen hängen Erhitzungstemperatur und auch maximale Erhitzungstemperatur von der Größe und Wandstärke der Formlinge und ihrem Verwendungszweck ab. Bei ihrer Verwertung sehr hohen Temperaturen ausgesetzte Glaskohlenstoffkörper werden zweckmäßig durch Erhitzen auf etwa 2800°C graphitiert.

Bei der Herstellung dickwandiger Glaskohlenstoffkörper kann der Zeitbedarf für die Sättigung des hygroskopischen Thermoplasten mit Wasser unerwünscht groß sein. Auch bei der Bestrahlung derartiger Körper läßt sich eine gleichmäßige Dosisverteilung nur mit großem Aufwand erreichen, beispielsweise durch Änderung der die Eindringtiefe bestimmenden Strahlspannung oder bei Körpern mit gekrümmten Flächen, durch Änderung des Bestrahlungswinkels. Eine Weiterentwicklung des Verfahrens vermeidet diese Nachteile. Der thermoplastische Kunststoff wird dabei in Granulatform mit Wasser gesättigt, beispielsweise durch Spritzgießen geformt, wobei Formlinge mit einem porösen Kern und dichter Oberflächenschicht gebildet werden, durch Bestrahlen und/oder Erwärmung in eine thermisch stabile Form übergeführt und dann carbonisiert. Nach einer anderen Ausführungsform werden die Granulate zur wenigstens teilweisen thermischen Stabilisierung mit ionisierender Strahlung bestrahlt und dann mit Feuchte gesättigt. Die Dosis ist in diesem Fall derart zu bemessen, daß der Thermoplast im wesentlichen thermisch stabilisiert wird, ohne seine Formbarkeit einzubüßen. Das bestrahlte Granulat wird mit Hilfe der in der Kunststofftechnik üblichen Verfahren, wie Extrudieren, Walzen und vor allem Spritzgießen, zu Formlingen mannigfaltiger Größe und Gestalt verarbeitet, die nach Erzeugung eines porösen Kerns und einer thermischen Nachvernetzung carbonisiert werden. Körper komplizierterer Gestalt stellt man zweckmäßig aus geometrisch einfachen Teilen her, die vor der thermischen Stabilisierung durch Kleben, Ultraschallschweißung oder anderen in der Kunststofftechnik üblichen Fügeverfahren miteinander verbunden werden.

Verfahrensgemäß hergestellte Glaskohlenstoffkörper haben einen feinzelligen porösen Kern mit einem mittleren Porendurchmesser von 0,01 bis 0,5 mm. Der Kern wird umschlossen von einer dichten Randschicht, deren Dicke dem Verwendungszweck angepaßt ist. Für tragende Elemente beträgt die Dicke einige Millimeter, für mechanisch nicht belastete Elemente zur Wärmedämmung kann die Dicke der Schicht weniger als ein Millimeter betragen. Die Rohdichte des Glaskohlenstoffkörpers kann in weiten Grenzen den Verwendungsbedingungen angepaßt werden, sie beträgt zweckmäßig 0,3 bis 1,0 g/cm³. Unabhängig von der Porosität sind die Körper gegen Fluide undurchlässig, so daß korrosive und abrasive Kräfte nur auf die äußere Oberfläche der Körper wirken. Die Beständigkeit entspricht aus diesem Grund massiven Glaskohlenstoffkörpern, deren größere Masse und Wärmeleitfähigkeit für eine Reihe von Anwendungen nachteilig sind.

Die Erfindung wird im folgenden anhand von Beispielen erläutert.

## Beispiel 1

Platten aus Polysulfon mit einer Dicke von 3 mm wurden etwa vier Wochen bei einer mittleren relativen Luftfeuchtigkeit von etwa 60 % und einer mittleren Temperatur von 22°C gelagert. Die aufgenommene Feuchtigkeitsmenge betrug 0,3 %, was der Sättigung unter diesen Bedingungen entspricht. Die Platten wurden dann bei 160°C getrocknet und in einer zweiten Erhitzungsstufe auf eine Temperatur von 220 und 300°C erwärmt. Mit steigender Verweilzeit im Trockenschrank wuchs die Dicke der feuchtigkeitsfreien Randschicht linear.

| Trocknungstemperatur | Verweilzeit | Dicke der Randschicht |
|---|---|---|
| 160°C | 30 min | 0,2 mm |
| | 60 min | 0,4 mm |
| | 90 min | 0,6 mm |
| | 120 min | 0,7mm |

In der zweiten Erhitzungsstufe wurde durch Verdampfen der Feuchtigkeit ein poröser Kern erzeugt, der von einer dichten Randschicht umschlossen ist. Porosität bzw. Rohdichte sind im wesentlichen Funktionen der Verweilzeit.

| 2. Erhitzungsstufe | Temperatur | Verweilzeit im Trocken- schrank | Rohdichte |
|---|---|---|---|
| | 220°C | 60 min | 1,10 g/cm |
| | 220°C | 30 min | 0,85 " |
| | 300°C | 90 min | 1,15 " |
| | 300°C | 30 min | 0,80 |

Der Kern der Platten war gleichmäßig feinzellig. Die Platten wurden mit Beta-Strahlen bestrahlt und thermisch stabilisiert, wobei die Dosis von 0,2 MJ/kg in zehn gleichen Teilen aufgebracht wurde. Zum Carbonisieren wurden die Platten mit einem Gradienten von 5 K/h auf 600°C und mit 33 K/h auf 1000°C erhitzt. Der Koksrückstand betrug 42 bis 44 %. Die erhaltenen Glaskohlenstoffkörper hatten einen schaumartig strukturierten Kern mit Rohdichten zwischen 0,8 und 1,2 g/cm². Der Permeabilitätskoeffizient betrug wegen der dichten Randschicht nur etwa $10^{-5}$ bis $10^{-6}$cm²/g.

## Beispiel 2

Granulat aus Polysulfon wurde drei Tage in Wasser bei einer Temperatur von 90°C gelagert und nach Aufnahme von etwa 0,8 % Feuchtigkeit in einer Spritzgießvorrichtung zu Platten mit den Kantenmaßen 50 x 100 x 4,4 mm verpreßt. Die vorerhitzte Gießmasse expandierte im Werkzeug, an der gekühlten Werkzeugwand bildete sich eine porenfreie, dichte Schicht. Die Dicke der porenfreien Schicht betrug etwa 0,15 mm, die mittlere Rohdichte 0,8 g/cm³. Der Thermoplast wurde dann zweistufig thermisch stabilisiert und vernetzt, zunächst durch Bestrahlung mit Beta-Strahlen, Dosis 0,1 MJ/kg und anschließend durch Erwärmen auf 300°C. Die nunmehr unschmelzbaren und formstabilen Platten wurden wie in Beispiel 1 beschrieben in Glaskohlenstoffkörper mit einem schaumartigen Kern und einer kompakten, glatten Oberfläche übergeführt. Die Rohdichte war 0,7 bis 0,8 g/cm³, der Permeabilitätskoeffizient im Mittel $10^{-5}$ cm²/g.

## Patentansprüche

1. Verfahren zum Herstellen eines Glaskohlenstoffkörpers mit schaumartiger Struktur aus thermoplastischen Kunststoffen, die vor dem Carbonisieren in eine thermisch stabile Form übergeführt werden,
dadurch gekennzeichnet, daß
a) ein hygroskopischer Thermoplast zur Aufnahme von Wasser in einer feuchten Atmosphäre gelagert und zu einem Körper geformt wird,

b) der Körper bei einer ersten Temperatur zur Erzeugung einer feuchtigkeitsarmen Randschicht getrocknet und bei einer zweiten Temperatur oberhalb der Erweichungstemperatur des Thermoplasten eine poröse Kernzone in dem Körper erzeugt wird, und

c) der Körper thermisch stabilisiert und durch Erhitzen carbonisiert wird.

2. Verfahren nach Patentanspruch 1,
dadurch gekennzeichnet,
daß der Thermoplast in Granulatform mit Wasser gesättigt und aus dem Granulat ein Körper geformt wird.

3. Verfahren nach Patentanspruch 1,
dadurch gekennzeichnet,
daß aus dem Thermoplast hergestellte Körper mit Wasser gesättigt werden.

4. Verfahren nach den Patentansprüchen 1 bis 3,
dadurch gekennzeichnet,
daß aromatische Gruppen enthaltende thermoplastische Kunststoffe verwendet werden.

5. Verfahren nach den Patentansprüchen 1 bis 4,
dadurch gekennzeichnet,
daß Polysulfon verwendet wird.

6. Verfahren nach den Patentansprüchen 1 bis 5,
dadurch gekennzeichnet,
daß dem Thermoplasten ein Treibmittel zugesetzt wird.

7. Verfahren nach den Patentansprüchen 1 bis 6,
dadurch gekennzeichnet,
daß dem Thermoplasten ein Porenregler zugesetzt wird.

8. Verfahren nach den Patentansprüchen 1 bis 7,
dadurch gekennzeichnet,
daß die Körper in beheizten Werkzeugen zur Trocknung der Randschicht und zum Aufblähen der Kernzone erhitzt werden.

9. Verfahren nach den Patentansprüchen 1 bis 8,
dadurch gekennzeichnet,
daß die Sättigung des Thermoplasten mit Wasser und die Erwärmung zum Trocknen der Randschicht und Aufblähen der Kernzone mehrmals wiederholt werden.

10. Verfahren nach den Patentansprüchen 1 bis 9,
dadurch gekennzeichnet,
daß der Körper durch Bestrahlung mit einer ionisierenden Strahlung thermisch stabilisiert wird.

11. Verfahren nach den Patentansprüchen 1 bis 10,
dadurch gekennzeichnet,
daß der Körper durch Bestrahlung mit Beta-Strahlen thermisch stabilisiert wird.

12. Verfahren nach den Patentansprüchen 1 bis 11,
dadurch gekennzeichnet,
daß der Körper mit einer Dosis von 0,2 bis 1,5 MJ/kg bestrahlt wird.

13. Verfahren nach den Patentansprüchen 1 bis 12,
dadurch gekennzeichnet,
daß die Bestrahlungsdosis stufenweise aufgebracht wird.

14. Verfahren nach den Patentansprüchen 1 bis 13,
dadurch gekennzeichnet,
daß der Körper nach der Bestrahlung einer thermischen Behandlung zur Vernetzung des Thermoplasten unterworfen wird.

15. Verfahren nach den Patentansprüchen 1 bis 14,
dadurch gekennzeichnet,
daß der Thermoplast vor dem Formen und der Aufnahme von Wasser, durch Bestrahlung teilstabilisiert wird.

**Claims**

1. Process for the production of a vitreous carbon body with foam-like structure from thermoplasts which, before carbonisation are converted to a thermally stable form, characterised in that

a) a hygroscopic thermoplast is stored in a moist atmosphere for uptake of water and is shaped to a body,

b) the body is dried at a first temperature for production of a moisture-deficient peripheral layer and a porous core zone is produced in the body at a second temperature above the softening temperature of the thermoplast, and

c) the body is thermally stabilised and is carbonised by heating.

2. Process according to claim 1, characterised in that the thermoplast in granulate form is saturated with water and a body is shaped from the granulate.

3. Process according to claim 1, characterised in that bodies produced from the thermoplast are saturated with water.

4. Process according to claims 1 to 3, characterised in that aromatic group-containing thermoplasts are used.

5. Process according to claims 1 to 4, characterised in that polysulphone is used.

6. Process according to claims 1 to 5, characterised in that a blowing agent is added to the thermoplast.

7. Process according to claims 1 to 6, characterised in that a pore regulator is added to the thermoplast.

8. Process according to claims 1 to 7, characterised in that the bodies are heated in heated tools for drying of the peripheral layer and for expansion of the core zone.

9. Process according to claims 1 to 8, characterised in that the saturation of the thermoplast with water and the heating for drying of the peripheral layer and expansion of the core zone are repeated several times.

10. Process according to claims 1 to 9, characterised in that the body is thermally stabilised by irradiation with an ionising radiation.

11. Process according to claims 1 to 10, characterised in that the body is thermally stabilised by irradiation with beta-rays.

12. Process according to claims 1 to 11, characterised in that the body is irradiated with a dose of 0.2 to 1.5 MJ/kg.

13. Process according to claims 1 to 12, characterised in that the irradiation dose is applied in stages.

14. Process according to claims 1 to 13, characterised in that the body is subjected after the irradiation to a thermal treatment for cross-linking of the thermoplast.

15. Process according to claims 1 to 14, characterised in that the thermoplast is partially stabilised by irradiation before the shaping and the uptake of water.


## Revendications

1. Procédé pour obtenir un solide en carbone vitreux ayant une structure spongieuse à partir de matières plastiques thermoplastiques, qui sont converties préalablement à la carbonisation sous une forme thermiquement stable, caractérisé en ce que

a) un thermoplastique hygroscopique est mis dans une atmosphère humide pour la reprise d'eau et façonné en un corps solide,

b) le solide est séché à une première température pour obtenir une couche de bordure pauvre en humidité et une zone nucléaire poreuse dans le solide est obtenue à une seconde température au-dessus de la température de ramollissement du thermoplastique,

c) le solide est stabilisé thermiquement et carbonisé par chauffage.

2. Procédé selon la revendication 1, caractérisé en ce que le thermoplastique est saturé d'eau sous forme de granulé et qu'un solide est façonné à partir du granulé.

3. Procédé selon la revendication 1, caractérisé en ce que les solides obtenus à partir des thermoplastiques sont saturés d'eau.

4. Procédé selon les revendications 1 à 3, caractérisé en ce que des matières plastiques thermoplastiques contenant des groupes aromatiques sont utilisées.

5. Procédé selon les revendications 1 à 4, caractérisé en ce qu'une polysulfone est utilisee.

6. Procédé selon les revendications 1 à 5, caractérisé en ce qu'on ajoute au thermoplastique un agent de propulsion.

7. Procédé selon les revendications 1 à 6, caractérisé en ce qu'on ajoute au thermoplastique un régulateur de pores.

8. Procédé selon les revendications 1 à 7, caractérisé en ce que les solides sont chauffés dans des outils chauffés pour le séchage de la couche marginale et pour gonfler la zone du noyau.

9. Procédé selon les revendications 1 à 8, caractérisé en ce que la saturation des thermoplastiques avec de l'eau, le chauffage en vue du séchage de la couche de bordure et le gonflement de la zone du noyau sont répétées plusieurs fois.

10. Procédé selon les revendications 1 à 9, caractérisé en ce que le solide est stabilisé thermiquement par irradiation avec un rayonnement ionisant.

11. Procédé selon les revendications 1 à 10, caractérisé en ce que le solide est stabilisé thermiquement par irradiation par des rayons Beta.

12. Procédé selon les revendications 1 à 11, caractérisé en ce que le solide est irradié avec une dose de 0,2 à 1,5 MJ/kg.

13. Procédé selon les revendications 1 à 12, caractérisé en ce que la dose d'irradiation est appliquée par étapes.

14. Procédé selon les revendications 1 à 13, caractérisé en ce que le solide après irradiation est soumis à un traitement thermique en vue de la réticulation du thermoplastique.

15. Procédé selon les revendications 1 à 14, caractérisé en ce que le thermoplastique avant le formage et la reprise d'eau, est stabilisé partiellement par irradiation.